# EUROPEAN PATENT SPECIFICATION

(11) **EP 4 061 151 B1**
(45) Date of publication and mention of the grant of the patent: **21.05.2025**
(21) Application number: 19829677.4
(22) Date of filing: 19.11.2019
(51) Int. Cl.: A23L 17/10, A23L 17/00, A23L 19/00, A23L 25/00, A23P 30/10

(54) **AN EDIBLE FOOD PRODUCT OF INCREASED BIOLOGICAL VALUE PREPARED FROM LYOPHILISED POWDER**
AUS LYOPHILISIERTES PULVER HERGESTELLTES ESSBARES PRODUKT MIT ERHÖHTEM BIOLOGISCHEM WERT
PRODUIT COMESTIBLE AYANT UNE BIODISPONIBILITÉ ACCRUE PRÉPARÉ À PARTIR DE POUDRE LYOPHILISÉE

(43) Date of publication of application: 28.09.2022
(73) Proprietor: Uab Geld Baltic, 36255 Panevezys (LT)
(72) Inventor: KAZIUKONIENE , Laura, LT-14185 Bukiskis Vilniaus raj. (LT)
(74) Representative: Zaboliene, Reda
(86) International application number: PCT/IB2019/059926
(87) International publication number: WO 2021/099816

(56) References cited:
- EP-A2- 1 078 577
- WO-A2-2004/112491
- CN-A- 109 645 500
- US-A1- 2014 356 517

## Description

### BACKGROUND OF THE INVENTION

The present invention relates to the field of the food industry, which describes invented formula for edible food products made from a particularly high amount of lyophilized powder and a technology for their production.

### TECHNICAL FIELD

The popularity of freeze-dried fruits and vegetables has grown rapidly in recent years. This is due to the fact that such products have been products of unprocessed fruits, vegetables or spices that retain their colour, aroma and nutritional value and do not contain added sugar.

Freeze-dried fruits and vegetables are known as a snack that retains vitamins for a long time. In addition, the freeze-dried fruits, berries and spices are incredibly lightweight, with high concentration of energy and can be used instead of meals.

One of the major obstacles for making such snacks is the use of binders, which "glues" all the ingredients together without negatively affecting the taste of the product and makes it easier to swallow. Most of such products, being manufactured currently, contain binders with high sugar content.

Some of the most widely used sugars are glucose, fructose, sugar, honey, rice syrup and many others. However, the high sugar content is often undesirable for consumers. In addition, sugar binders are usually processed at high temperatures which reduce the amount of vitamins retained in the product.

CN106722959 describes a dietary supplement for infants and a method for its production. The dietary supplement is made out of tofu, nutrition enhancer, soy protein isolate, freeze-dried apple powder, banana powder, carrot powder and milk powder. However, it is a powdery product.

US2016095329 describes an edible snack having low content of water and large content of dry materials and a method for its production. To produce the snack a porous material such as a freeze-dried fruit or vegetable, or an extruded grain product is used. The material then is coated with 25% whey protein isolate.

The disadvantage of the inventions is that lyophilized powder cannot be eaten usually: they tend to stick to the walls of the mouth and throat. If the powder is compressed into a pill, a subject could choke while swallowing it. Thus, natural products have been used to design a connective compound that, when mixed with a large amount of powder, forms an easily absorbed healthy food.

WO2004/112491 describes the new health food type product is provided having a base composition and a freeze-dried component substantially uniformly distributed through the base composition to provide a more nutritious health food product having superior organoleptic properties which more or less last the duration of consumption of the product. The freeze-dried product is a fruit, preferably a granulated or powdered fruit which has been produced by a freeze-dried process or is snap frozen. The product, as well as having superior nutritional qualities also has increased appeal and overcomes defects associated with existing health food products particularly with regard to mouth feel when being consumed.

### BRIEF DESCRIPTION OF THE INVENTION

The present invention relates to the field of the food industry, which describes invented formula for edible food products made from a particularly high amount of lyophilized powder and a technology for their production. Unique manufacturing technology does not require any additional lyophilization after the formulation, is fast and efficient. These food products can be consumed as a candy, snacks, or dry portions. Edible food products produced from freeze-dried powder, vegetable butter and protein isolates (with or without the addition of natural spices) have a natural character, particularly high biological activity and a long shelf life.

The invention is defined by the claims.

The invention is a process for the preparation of an edible food product, comprising 40% cocoa butter, 5% pea protein isolate and 50% lyophilized powder of plant/animal origin, characterized in that it comprises the following steps:
a) melting the cocoa butter at a temperature of 35-40° C;
b) mixing the ingredient obtained in step a) with pea protein isolate and further heating;
c) mixing the mixture obtained in step b) with a lyophilized powder of plant/animal origin;
d) dispensing the resulting mixture into moulds and cooling at about -18° C, for about 15 minutes.

Optionally, natural spices can be added during manufacturing process of a product. The food product obtained by the invention is used for the preparation of snacks, food tablets, sweets, individual meal pack and the like.

### DETAILED DESCRIPTION OF THE INVENTION

The products of plant and/or animal origin selected first are exposed to lyophilization.

This means the preservation of fruits, berries, spices and other products by deep cooling (up to -80°C.) followed the removal of the moisture by sublimation in a vacuum. As the moisture from the ice converts into the vapor, bypassing the liquid state, fruits and berries dry out preserving their physical form, flavour, nutritional qualities and vitamins.

A completely natural product, free of preservatives such as sugar is obtained. The taste remains almost the same and, as we know, this is not the case for heat-treated or conventionally dried fruit and vegetables.

A large amount of freeze-dried powder was combined with protein isolate and cocoa butter during the production of this product, and unexpectedly an easy-to-eat snack was discovered.

Primarily, lyophilized powders are prepared from raw material of vegetable and/or animal origin. Vegetable raw materials comprise nutritious raw materials such as fruits, berries, vegetables, nuts, cereals, algae and others. Animal raw materials comprise nutritious raw materials such as meat, fat, eggs, honey, fish, seafood and others. The raw material is frozen to -80° C, then placed in a lyophilizer where moisture is removed by the help of a vacuum. By drying the raw material in this way, virtually all vitamins remain and the product has a very long shelf life (as mould does not propagate due to the dryness), the product is 100% natural and 10 times lighter than the raw material.

The lyophilized product is ground and a powder is obtained which is used to produce the product. Compressed lyophilized powder provides high energy value of 100% natural products in a low weight and volume.

Cocoa butter (40%) is dissolved at about 35-40° C. and then mixed with pea protein isolate (5%). Further heating is carried out by admixing said prepared lyophilized powder (50%). After thorough mixing, the resulting mixture is dispensed into molds and cooled rapidly, at about -18° C for about 15 minutes.

The resulting product has valuable nutritional properties, in particular high biological activity and long shelf life.

## Claims

1. A method of producing an edible food product, comprising 40% cocoa butter, 5% pea protein isolate and 50% lyophilized powder of plant and/or animal origin,
**characterized in that** said method comprises the steps of:
a) melting the cocoa butter at a temperature of 35 - 40°C;
b) mixing the ingredient obtained in step a) with pea protein isolate and further heating;
c) mixing the mixture obtained in step b) with a lyophilized powder of plant/animal origin;
d) dispensing the resulting mixture into molds and cooling at about -18° C, for about 15 minutes.

2. The method according to claim 1 or 2, **characterized in that** it further comprises the addition of natural spices.

## Patentansprüche

1. Verfahren zur Herstellung eines essbaren Lebensmittels, bestehend aus 40 % Kakaobutter, 5 % Erbsenproteinisolat und 50 % lyophilisiertes Pulver pflanzlichen und/oder tierischen Ursprungs umfasst,
**dadurch gekennzeichnet, dass** das Verfahren die folgenden Schritte umfasst:
a) Schmelzen der Kakaobutter bei einer Temperatur von 35 bis 40 °C;
b) Mischen der in Schritt a) erhaltenen Zutat mit Erbsenproteinisolat und weiteres Erhitzen;
c) Mischen der in Schritt b) erhaltenen Mischung mit einem lyophilisierten Pulver pflanzlichen/tierischen Ursprungs;
d) Abfüllen der resultierenden Mischung in Formen und Abkühlen bei etwa -18 °C für etwa 15 Minuten.

2. Verfahren nach Anspruch 1 oder 2, **dadurch gekennzeichnet, dass** es außerdem die Zugabe von natürlichen Gewürzen umfasst.

## Revendications

1. Procédé de fabrication d'un produit alimentaire comestible, comprenant 40 % de beurre de cacao, 5 % d'isolat de protéine de pois et 50 % de poudre lyophilisée d'origine végétale et/ou animale,
**caractérisé en ce que** ledit procédé comprend les étapes :
a) faire fondre le beurre de cacao à une température de 35 à 40 °C ;
b) mélanger l'ingrédient obtenu à l'étape a) avec l'isolat de protéines de pois et poursuivre le chauffage ;
c) mélanger le mélange obtenu à l'étape b) avec une poudre lyophilisée d'origine végétale/animale ;
d) disperser le mélange obtenu dans des moules et refroidir à environ -18°C pendant environ 15 minutes.

2. Procédé selon la revendication 1 ou 2, **caractérisé en ce qu'**il comprend en outre l'ajout d'épices naturelles.
